(19) Europäisches Patentamt
European Patent Office
Office européen des brevets

(11) **EP 1 533 399 B1**

(12) **EUROPÄISCHE PATENTSCHRIFT**

(45) Veröffentlichungstag und Bekanntmachung des Hinweises auf die Patenterteilung:
**16.02.2011 Patentblatt 2011/07**

(51) Int Cl.:
*C25D 3/56* (2006.01)   *C25D 21/18* (2006.01)
*C02F 1/04* (2006.01)

(21) Anmeldenummer: **04027712.1**

(22) Anmeldetag: **23.11.2004**

(54) **Verfahren zum abwasserarmen Betrieb eines alkalischen Zink-Nickel-Bades**

Process for low waste water operation of alkaline zinc-nickel bath

Procédé pour l'exploitation à faible quantité d'eaux usées d'un bain zinc-nickel alcalin

(84) Benannte Vertragsstaaten:
**AT BE BG CH CY CZ DE DK EE ES FI FR GB GR HU IE IS IT LI LU MC NL PL PT RO SE SI SK TR**

(30) Priorität: **24.11.2003 DE 10355077**

(43) Veröffentlichungstag der Anmeldung:
**25.05.2005 Patentblatt 2005/21**

(73) Patentinhaber: **Walter Hillebrand GmbH & Co. Galvanotechnik**
**58739 Wickede/Ruhr (DE)**

(72) Erfinder:
• **Hillebrand, Ernst-Walter**
**58739 Wickede/Ruhr (DE)**
• **Klos, Klaus-Peter, Dr.**
**65468 Trebur (DE)**
• **Morgenstern, Karl**
**58638 Iserlohn (DE)**

(74) Vertreter: **König, Gregor Sebastian et al**
**König Szynka Tilmann von Renesse**
**Patentanwälte Partnerschaft**
**Postfach 11 09 46**
**40509 Düsseldorf (DE)**

(56) Entgegenhaltungen:
DE-A1- 4 441 821    DE-A1- 19 710 157
DE-A1- 19 848 467    GB-A- 296 989
GB-A- 1 497 873    US-A- 3 655 337

• **"Geschlossener Wasserkreislauf - praktische Anwendung der Vakuumdestillation" MO METALLOBERFLACHE, IGT INFORMATIONSGESELLSCHAFT TECHNIK, MUNCHEN, DE, 1. Januar 1997 (1997-01-01), Seiten 1-5, XP002990608 ISSN: 0026-0797**

**Beschreibung**

Die Erfindung betrifft ein Verfahren zum abwasserarmen Betrieb eines alkalischen Zink-Nickel-Bades sowie ein System zur Badpflege.

Alkalische Zink-Nickel-Bäder haben gegenüber sauren den Vorteil, dass die Nickelgehalte in den Legierungsschichten auch bei niedrigen Stromdichten im wesentlichen konstant bleiben, was einen besonderen Vorteil für Trommelware darstellt. Zudem weisen alkalische Zink-Nickel-Elektrolyte eine bessere Metallverteilung auf. Aufgrund dieser Vorteile werden alkalische Zink-Nickel-Elektrolyte weitreichend und bevorzugt eingesetzt. Alkalische Zink-Nickel-Elektrolyte müssen Komplexbildner, wie beispielsweise aliphatische Amine enthalten, die die Nickel-Ionen in Lösung halten. Sofern keine Komplexbildner eingesetzt würden, würde das Nickel als Nickelhydroxid ausfallen. Daher sind Komplexbildner zwingend erforderlich. Die im Stand der Technik bekannten alkalischen Zink-Nickel-Bäder haben aufgrund dieser Notwendigkeit jedoch einige Nachteile.

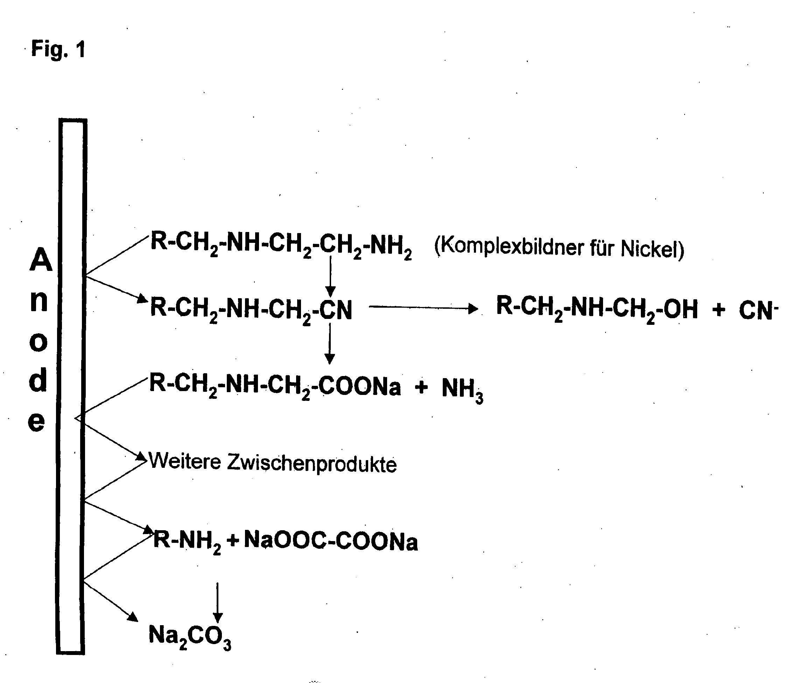

Nach wenigen Wochen Badbetrieb kann Cyanid im alkalischen Elektrolyten nachgewiesen werden, obwohl der Elektrolyt an sich cyanidfrei ist. Die Cyanid-Entwicklung ist auf den oxidativen Abbau des Komplexbildners an der Anode zurückzuführen. Die durch diesen entstehenden Produkte senken die Stromausbeute und somit die Leistungsfähigkeit des Bades und erschweren die Abwasserbehandlung. Neben dem Cyanid entstehen des weiteren Oxalat und Carbonat als Abbauprodukte des Komplexbildners. Eine Übersicht ist in Fig. 1 gezeigt. Die Cyanid-Belastung erfordert ein regelmäßiges Erneuern des Bades und eine spezielle Abwasserbehandlung, die sich erheblich auf die Betriebskosten des Bades auswirkt. Dies gilt umso mehr, als die Abwässer zudem eine sehr hohe Organik-Konzentration aufweisen und mit einem CSB-Wert von ca. 15 000 bis 20 000 mg/l die Cyanid-Entgiftung erschweren. Die Einhaltung der vom Gesetzgeber vorgegebenen Abwasserwerte ist dann nur noch durch umfangreichen Zusatz von Chemikalien möglich.

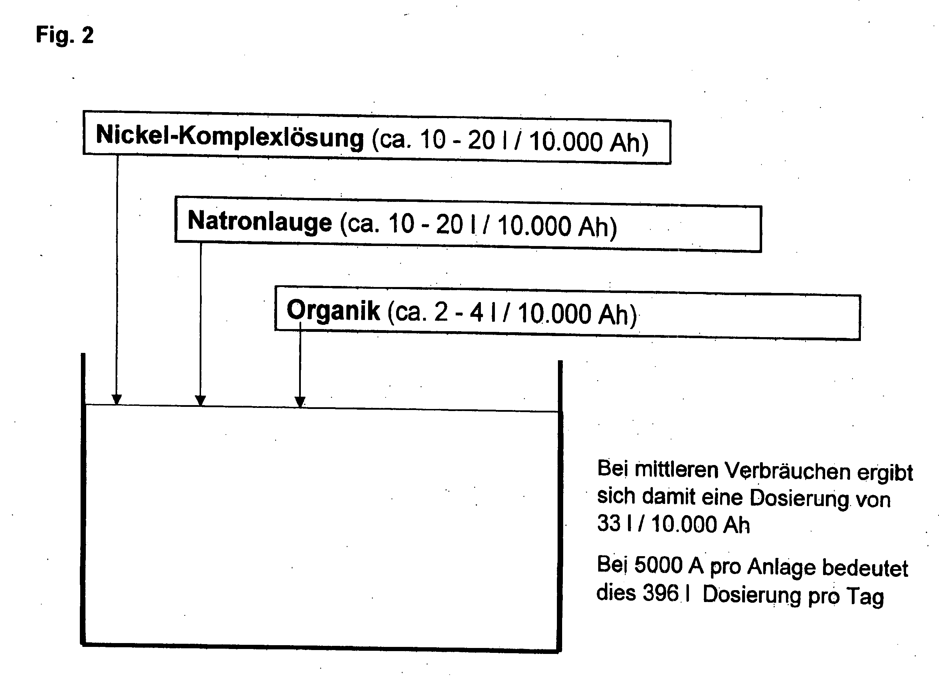

Insgesamt haben die im Stand der Technik bekannten Elektrolyten eine geringe Standzeit, was einen ungleichmäßigen Schichtdickenaufbau zur Folge hat. Daher muß der Elektrolyt regelmäßig erneuert und entsorgt werden (ca. 1000l/Woche). Ein weiterer Nachteil dieser Bäder in bezug auf ihre Ökonomie ist auch die zu beobachtende Volumenzunahme beim Betrieb des Bades. Die Volumenzunahme ist bedingt durch die erforderliche Dosierung von Natronlauge, Nickel-Komplex-Lösung und Glanzbildner. Eine Übersicht ist in Fig. 2 gezeigt. Bislang wurde die Volumenzunahme nur bedingt als Nachteil empfunden, da durch die Zunahme das im Bad zwangsläufig entstehende Cyanid verdünnt wurde.

Die Probleme im Hinblick auf die Abbauprodukte wurden bereits in vorteilhafter Weise durch eine Ionenaustauschermembran gelöst. Das Prinzip ist in DE 198 34 353 beschrieben. Die Membran verhindert die oxidative Zerstörung der Amine, wodurch die Abbauprodukte, wie insbesondere Cyanid und Oxalat, auch über einen längeren Betrieb des Bades nicht nachweisbar sind.

Die Membrantechnologie hat daher die zuvor bekannten alkalischen Zink-Nickel-Bäder bedeutend verbessert. Jedoch bleibt das Problem der Volumenzunahme des Bades bestehen. Dies ist ein Problem, da die Zunahme die zu entsorgenden Abwassermengen erheblich erhöht. Des weiteren reichern sich auch bei Einsatz der Membran zwangsläufig Komplexbildner an, da Nickel dem Bad in Kombination mit Komplexbildnern zugeführt wird und Nickel - nicht jedoch der Komplexbildner - ständig bei der Abscheidung der Schicht verbraucht wird. Eine zu hohe Konzentration an Komplexbildner hat nachteilige Auswirkungen auf die Qualität der Schichten, da sich diese an der Kathode anlagern und dort ausölen können. Bei der Ausölung bildet sich ein Film auf der Kathodenoberfläche aus, der die weitere Abscheidung von Metall verhindert und dadurch die Qualität des abgeschiedenen Überzuges erheblich verschlechtert. Dieser wird rauh und glanzlos. Dieser Effekt tritt insbesondere bei hohen Stromdichten auf. Daher ist es erforderlich, die organischen Stoffe aus dem Bad zu entfernen, um die Überzüge auch über einen längeren Zeitraum aus dem Bad mit konstanter Qualität abscheiden zu können. Diese Stoffe belasten auch die Abwässer. Durch den Betrieb des Bades erhöht sich ferner die Konzentration an Sulfaten, da Nickel üblicherweise in Form von Nickelsulfat zugegeben wird. Die Nickellösungen enthalten ca. 85g/l Nickel und entsprechendes Sulfat. Üblicherweise werden ca. 10 - 15 l/10000 Ah Nickellösung dem Elektrolyten zugegeben, so daß die Konzentration im Bad enorm ansteigt. Sulfate können als Salze ausfallen und dadurch die Zusammensetzung des Bades und somit die Qualität der Schichten nachteilig beeinflussen. Ferner senken sie die Löslichkeit des Komplexbildners herab und fördern somit die nachteilige Ausölung desselben im Kathodenfilm. Diese Stoffe sind daher als Abfallprodukte anzusehen, welche den Betrieb des Bades stören und dazu führen, daß der Elektrolyt laufend erneuert werden muß, was nachteilig in Bezug auf die Kosten ist. Für die Entfernung der Abfallprodukte existiert keine zufriedenstellende Lösung.

Der vorliegenden Erfindung liegt daher die Aufgabe zugrunde, ein Verfahren sowie ein System zum Betrieb eines alkalischen Zink-Nickel-Bades zur Verfügung zu stellen, mit welchem Abwassermengen eingespart werden können und durch welches angereicherte Stoffe, die den Betrieb des Bades behindern, entfernt werden können.

Gelöst wird diese Aufgabe durch das erfindungsgemäße Verfahren. Das zu betreibende alkalische Bad, aus welchem die Zink-Nickel-Überzüge galvanisch abgeschieden werden, weist den typischen Aufbau mit einer Anode und eine Kathode auf. Ferner weist es eine Ionenaustauschermembran auf, die den Anolyten von dem alkalischen Katholyten trennt. Der alkalische Katholyt, der dem eigentlichen Zink-Nickel-Elektrolyten entspricht, weist die übliche Chemie auf, so u.a. Zink-Ionen, Nickel-Ionen sowie Komplexbildner, um insbesondere die Nickelionen im Alkalischen in Lösung zu halten.

Die Reinigung des Elektrolyten wird erfindungsgemäß durchgeführt, indem der zu reinigende Katholyt (Zink-Nickel-Elektrolyt) in einen Verdampfer geführt und dort aufkonzentriert wird. Überraschenderweise hat sich gezeigt, dass dadurch nicht nur der Elektrolyt aufkonzentriert wird, sondern auch die Löslichkeit der Komplexbildner abnimmt. Sobald der Elektrolyt ausreichend aufkonzentriert ist, sind die überschüssigen Amine nicht mehr löslich. An diesem Punkt bildet sich eine Phase auf dem Elektrolyten, in der die Organik aufschwimmt. Diese organische Phase kann auf einfache Weise vom Elektrolyten abgetrennt werden. Der Elektrolyt wird erfindungsgemäß von überschüssigen Sulfaten befreit, indem diese ausgefällt und entsorgt werden.

Der erfindungsgemäß von der überschüssigen Organik und Salzen befreite und somit regenerierte Elektrolyt kann wiederverwertet und zum Katholyten zurückgeführt werden. Dies hat den Vorteil, dass das Verfahren eine Kreislaufführung zuläßt und Abwasser- und Elektrolytmengen eingespart werden. Eine solche Kreislaufführung ist mit den im Stand der Technik bekannten Elektrolyten nicht möglich. Die erfindungsgemäße Badpflege hat zur Folge, daß die möglichen hohen Stromausbeuten (ca. 70%) über einen langen Zeitraum konstant bleiben. Dadurch werden die erforderlichen Expositionszeiten verringert und folglich die Beschichtungskapazität erheblich gesteigert. Die Verdampfung und Ausfällung von Abfallprodukten ist zudem energiesparend und umweltschonend. Die aufkonzentrierten Abfallprodukte können einfach entsorgt werden. Der erfindungsgemäße Reinigungsvorgang kann einfach in bestehende Betriebsprozesse integriert werden.

Der Begriff Ausfällung umfaßt im Sinne der Erfindung sowohl die Ausfällung der Sulfate durch Zugabe von Fällungsmitteln (bspw. Bariumhydroxid) als auch die Ausfällung ohne eine solche Zugabe.

Für die Ausfällung der Sulfate sollen verschiedene Möglichkeiten erläutert werden.

Gemäß einer Variante wird der zu reinigende Elektrolyt zunächst nach dem Eindampfen von der organischen Phase befreit. Der wässrige, sulfatreiche, aufkonzentrierte Elektrolyt wird anschließend in einen Kristallisator geführt und in diesem abgekühlt. Die Abkühlung auf Temperaturen unter 10°C, vorzugsweise +-3 bis +-4° hat sich als vorteilhaft erwiesen. Durch die Abkühlung des Elektrolyten fällt das Sulfat spontan mit dem jeweiligen Gegenion der Lauge - beispielsweise Natriumsulfat im Falle des Einsatzes von NaOH - aus und kann auf einfache Weise entfernt, bspw. abfiltriert werden. Die so entstehende Salzfracht kann als Feststoff entsorgt werden. Dies erleichtert die Entsorgung gegenüber den voluminösen wässerigen Abfällen.

Gemäß einer weiteren Ausführungsform wird der aufkonzentrierte Elektrolyt zur weiteren Reinigung und Befreiung von Sulfat erneut einem Verdampfer zugeführt. In diesem Fall fällt das Natriumsulfat schon bei Raumtemperatur aus, so dass vorteilhafterweise keine Kühlung notwendig ist. Bei dieser Variante ist es von Vorteil, einen Verdampfer mit Rührwerk einzusetzen, da das Natriumsulfat schnell aushärtet.

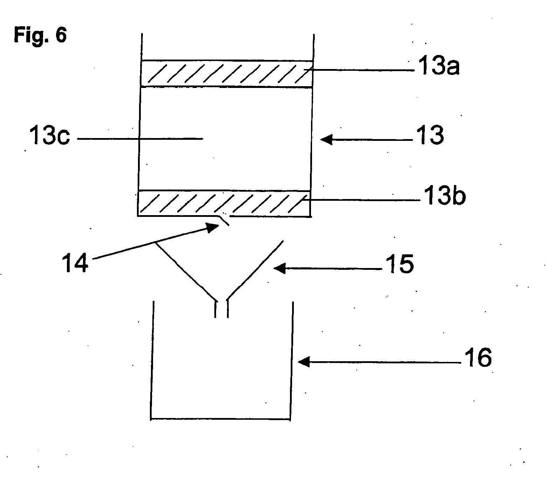

Gemäß einer weiteren Variante wird die Entfernung der Organik und die Ausfällung der Sulfate in einem Schritt durchgeführt. Es hat sich überraschender Weise gezeigt, daß wenn der zu reinigende Elektrolyt lange genug eingedampft wird, sich nicht nur eine organische Phase ausbildet, sondern auch die Sulfate mit dem Gegenion der Lauge, zumeist Natrium, ausfallen. Einzelheiten sind in Fig. 6 beschrieben. Diese Variante ist bevorzugt, da die Reinigung in einem Schritt erfolgen kann.

Ferner besteht grundsätzlich auch die Möglichkeit, die Sulfate durch Zugabe von Fällungsmitteln wie beispielsweise Bariumhydroxid auszufällen.

Die verbrauchte Organik, die als ölige Phase vorliegt, kann aufgrund der hohen Konzentration kostengünstig entsorgt werden. Eine Belastung der Abwässer wird verhindert. Gemäß einer weiteren Variante kann die organische Phase nach einer entsprechenden Aufbereitung zur Nickel-Mischung zurückgeführt werden.

Um die Kreislaufführung von Prozess und Spülbädern zu optimieren, wird das durch den Verdampfungsprozess entstehende Destillat dem Spülwasser zugeführt. Dies erhöht die Verfahrensökonomie.

Auch das Spülwasser enthält wiederverwertbare Elektrolyt-Komponenten. Gemäß einer vorteilhaften Weiterbildung wird daher auch das Spülwasser einem Verdampfer zugeführt und aufkonzentriert. Das dabei entstehende Konzentrat kann wiederum dem Elektrolyten und somit dem Kreislauf zugeführt werden, das Destillat wird vorzugsweise wieder zum Spülwasser zurückgeführt. Dies ist besonders ökonomisch. So kann beispielsweise aus ca. 1000 l Spülwasser 10 - 100 l Konzentrat gewonnen werden. Die zusätzliche Wiederaufbereitung des Spülwassers ist insbesondere auch aus ökologischer Sicht von Vorteil, da die Abwässer geringer belastet werden und weniger Abfall anfällt.

Vorzugsweise ist die Anode in einem Anoden-Kasten angeordnet. Durch die erforderliche Spülung des Membran-Kastens kommt es zur Verdünnung des Katholyten (Elektrolyten), da die Membran aufgrund ihrer Semipermeabilität für Wasser durchlässig ist und dieses in den Elektrolyten wandert. Dies führte beim Betrieb des Bades zu einer nachteiligen Verdünnung des Katholyten (Zi-Ni-Elektrolyten). Die Verdünnung kann zum einen durch die beschriebene Verdampfer-Technologie mitausgeglichen werden. Eine weitere Verbesserung lässt sich gemäß einer vorteilhaften Weiterbildung der Erfindung dadurch erzielen, dass die Umflutung des Anolyten nicht mehr kontinuierlich, sondern getaktet durchgeführt wurde. Dadurch entfällt der Pumpendruck auf die Membran, und die Diffusion von Wasser in den Elektrolyten (Katholyten) wird schwächer. Dadurch lassen sich erhebliche Einsparungen erzielen. Dies soll anhand eines Beispiels erläutert werden. Bei einem Testbad von 20

000 l war pro Woche ein Zuwachs von 4000 l zu beobachten. Nachdem die Umflutung des Anolyten getaktet wurde, sank dieser Zuwachs auf nur 1500 l pro Woche.

Mit der Erfindung wird ferner ein System zur Verfügung gestellt, mit welchem ein alkalisches Zink-Nikkel-Bad entsprechend dem geschilderten Verfahren gepflegt werden kann. Das System weist einen Verdampfer zwecks Aufkonzentrierung und eine Ausfällungseinheit zwecks Entfernung der Sulfate auf. Verdampfer und Ausfällungseinheit können identisch sein, sofern die Reinigung in einem Schritt erfolgt. Die im Zusammenhang mit dem erfindungsgemäßen Verfahren geschilderten Einzelheiten und Vorteile gelten auch auf das erfindungsgemäße System.

Fig. 1      zeigt den oxidativen Abbau des Komplexbildners an der Anode,

Fig. 2      zeigt die durch die Dosierung bedingte Volumenzunahme im Elektrolyten,

Fig. 3      zeigt den grundsätzlichen Aufbau des mit dem erfindungsgemäßen Verfahren zu betreibenden Zink-Nikkel-Bades,

Fig. 4a und b      zeigen das erfindungsgemäße Verfahren gemäß einer vorteilhaften Ausführungsform,

Fig. 5      zeigt die Integration des erfindungsgemäßen Verfahrens in ein Gesamtkonzept;

Fig. 6      zeigt schematisch die Reinigung des Elektrolyten gemäß der Variante, bei der Trennung von Organik und Sulfat in einem Schritt erfolgt.

Fig. 1 zeigt die durch den oxidativen Abbau des Komplexbildners an der Anode entstehenden Produkte. Diese Abbauprodukte senken die Stromausbeute und somit die Leistungsfähigkeit des Bades. Ferner erschweren sie die Abwasserbehandlung, da Cyanid, Oxalat und Carbonat entsteht. Insbesondere die Bildung von Cyanid führt zu einem erheblichen Mehraufwand bei der Abwasserbehandlung. Diese Abbauprodukte entstehen bei den im Stand der Technik bekannten alkalischen Zink-Nickel-Bädern, die ohne eine ionenaustauschermembran betrieben werden.

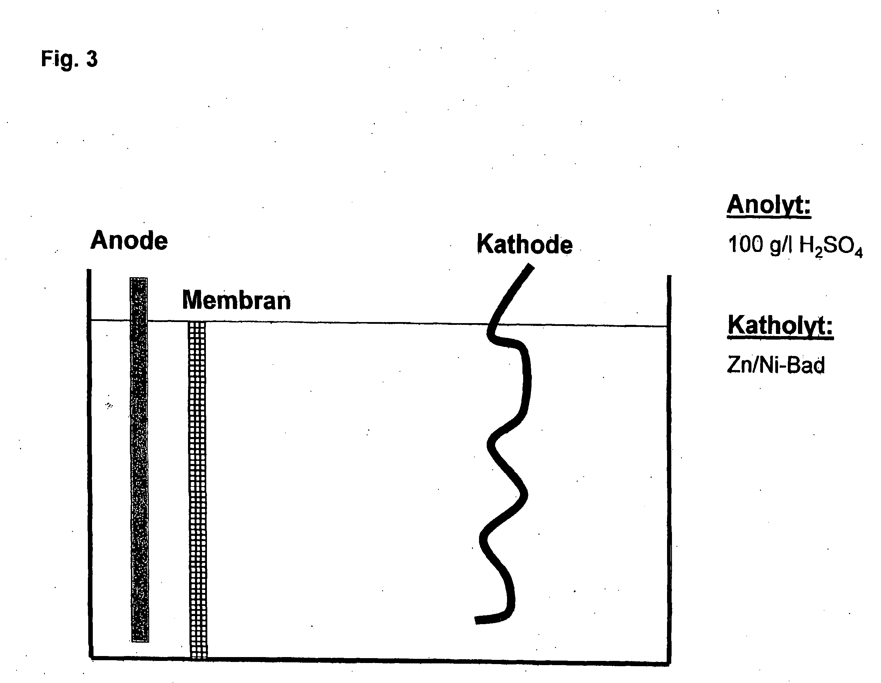

Fig. 3 zeigt den grundsätzlichen Badaufbau. In dem Behälter 1 ist die Anode 2 von der Kathode 3 durch eine Membran 4 getrennt. Dadurch wird der Anolyt 5, in dem die Anoden-Reaktion stattfindet, von dem den Katholyten darstellenden Zi-Ni-Elektrolyten 6 getrennt. Der Anolyt 5 besteht aus verdünnter Schwefelsäure; vorzugsweise enthält der Anolyt 5 100 g/l H2SO$_4$. Durch diesen Aufbau diffundieren im wesentlichen lediglich Protonen bzw. Hydoxoniom-Ionen aus dem Anoden-Raum 5 in den Elektrolyten 6. Dies verhindert die in Fig. 1 dargestellte oxidative Zerstörung der im Elektrolyten enthaltenden komplexbildenden Amine. Dadurch kann zum einen Chemie eingespart werden. Ferner werden keine oxidativen Abbauprodukte mehr gebildet, so dass in vorteilhafter Weise auch kein zu entsorgender Schlamm anfällt. Ferner wird dadurch eine geringere Ausschleppung erreicht, da der Elektrolyt kontinuierlich niedrig viskosend ist.

In diesem Bad stellt sich die Anoden-Reaktion (Membran) wie folgt dar:

$$2\ H_2O = O_2 + 4\ e^- + 4\ H^+$$

Die Kathoden-Reaktion ist wie folgt darzustellen:

$$Zn^{++} + 2\ e^- = Zn^0$$

$$Ni^{++} + 2\ e^- = Ni^0$$

$$2\ H_2O + 4\ e^- = 2\ H_2 + 2\ (OH)^-.$$

Die Membran ist vorzugsweise eine solche, wie sie in der DE 198 34 353 beschrieben ist. Die diesbezügliche Offenbarung wird hiermit vollständig in die Beschreibung der vorliegenden Erfindung aufgenommen. Das Bad kann entweder wie in Fig. 3 dargestellt eine Membran aufweisen. Ferner besteht die Möglichkeit, das Bad mit mehreren Membraneinheiten zu versehen. Diese bestehen vorzugsweise aus Kästen, die sowohl die Anode als auch die Membran enthalten. Zwischen die Membraneinheiten werden dann die Kathoden angeordnet. Dies hat den Vorteil, daß die Effizienz erhöht wird und verbrauchte oder beschädigte Membranen einfach und kostengünstig ausgetauscht werden können.

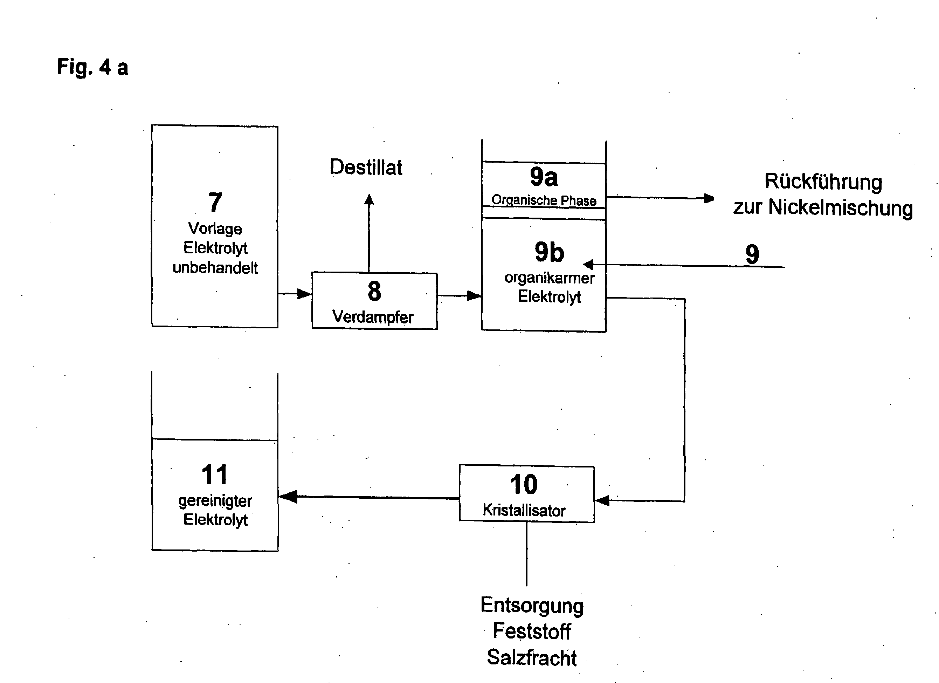

Fig. 4a zeigt den Reinigungsprozess gemäß einer Ausführungsform. Der zu reinigende Elektrolyt 7 wird einem Verdampfer 8 zugeführt und aufkonzentriert. Der Verdampfer arbeitet vorzugsweise mit Vakuumverdampfung mit Wärmepumpenprinzip. Das Destillat wird wiederum dem Spülwasser zugeführt. Der aufkonzentrierte Elektrolyt 9 weist mehrere Phasen auf. Aufgrund des durch die Aufkonzentrierung ansteigenden Natronlauge-Gehalts ist das komplexbildende Amin im Elektrolyten nicht länger löslich. Dadurch bildet sich eine obere Phase 9a aus, die die Organik enthält. Diese Phase kann abdekantiert werden, wodurch die Organik vom übrigen Elektrolyten getrennt wird. Die verbleibende wässerige Phase 9b stellt den organikarmen Elektrolyten dar. Dieser enthält jedoch weiterhin Sulfate - bzw. die entsprechenden Salzkomponenten des Nickels - , die die Badzusammensetzung nachteilig beeinflussen.

Um auch diese zu entfernen und die Ausfällung von schwerlöslichen Sulfatsalzen zu verhindern, wird der organikarme Elektrolyt 9b in einen Kristallisator 10 geführt. Der Kristallisator 10 trennt durch Abkühlung auf ca. +-3° C den Elektrolyten 9b in zwei Teile. Durch Auskristallisation der Feststoffe entsteht eine Salzfracht, die einfach entsorgt werden kann. Zum anderen entsteht der regenerierte, gereinigte Elektrolyt 11. Dieser wird wiederum dem Katholyten des Bades zugeführt. Dadurch wird eine erhebliche Einsparung an Abwässern und Kosten erreicht und das Bad kann in einem kosteneffizienten und umweltbewußten Kreislaufprozeß geführt werden. Die entstehenden Monokonzentrate können Fachfirmen zur Entsorgung oder Wiederaufbereitung übergeben werden. Es versteht sich, daß durch die erfindungsgemäße Ausfällung nicht alle Sulfate aus dem Elektrolyten entfernt werden müssen, sondern lediglich eine Entfernung von überschüssigem Sulfat erfolgt, um die Konzentration unter eine kritische Grenze zu senken. Durch die Fällung kann beispielsweise die Konzentration von Sulfat von 60 - 65 g/l auf ca. 30 - 35 g/l gesenkt werden - je nach Wunsch -, so daß sie wieder in einem akzeptablen Bereich liegt.

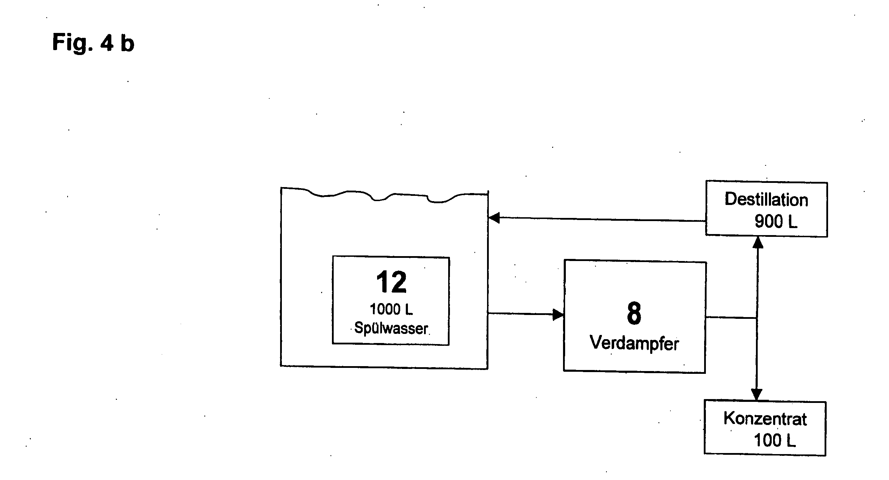

Fig. 4b zeigt eine weitere Variante, in welcher auch die Spülwässer mittels Verdampfung aufkonzentriert werden. So werden beispielsweise bei der Zuführung von 1000 l Spülwasser 12 in den Verdampfer 8 100 l Konzentrat und 900 l Destillat gebildet. Das Konzentrat kann wiederum dem Katholyten des Bades zugeführt werden, das Destillat dem Spülwasser, wie dargestellt.

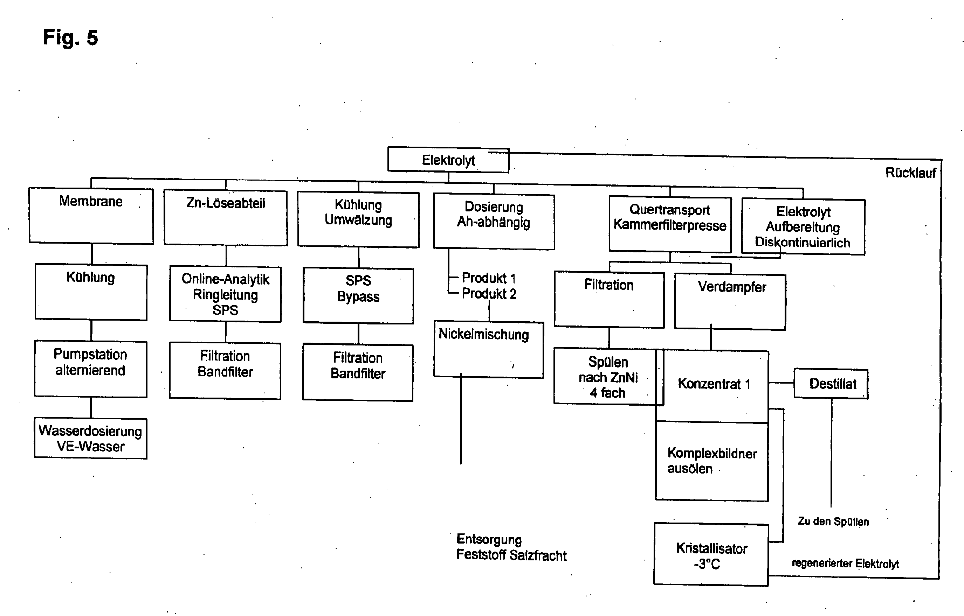

Fig. 5 zeigt die Integration des erfindungsgemäßen Reinigungsverfahrens in das Gesamtsystem zum Betrieb des alkalischen Zink-Nickel-Bades. Wie dargestellt, erfolgt die Aufbereitung des Elektrolyten vorzugsweise diskontinuierlich. Die Reinigung des Elektrolyten durch Verdampfung und Kristallisation erfolgt vorzugsweise einmal pro Woche für einen Tag.

Die Führung des Badbetriebs soll anhand eines 20 000 l umfassenden Elektrolyten erläutert werden. Beim Betrieb des Bades erhöht sich das Volumen desselben durch den in Fig. 2 dargestellten Volumenzuwachs nach vier Wochen bereits auf ca. 25 000 l. Die Sulfatkonzentration steigt durch die Zugabe der Nickellösung kontinuierlich auf ca. 60-65g/l im Elektrolyten an und muß gesenkt werden.

Die hinzugekommenen 5000 l werden um 3000 l eingeengt. 2000 l des gemäß dem erfindungsgemäßen Verfahren gereinigten Elektrolyten werden wiederum dem Bad zugeführt. Die restlichen ca. 3000 l Destillat werden dem Spülwasser zugeführt. Nach einer Woche werden von den 22 000 l wiederum 5000 l zum Aufreinigen entfernt. Die Differenz von 3000 l wird durch Zugabe von 3000 l frischen Elektrolyten ausgeglichen. Dadurch entsteht wiederum ein Gesamtvolumen von 20 000 l und 5000 l können wiederum dem erfindungsgemäßen Reinigungsprozess unterworfen werden.

Fig. 6 zeigt eine bevorzugte Aufreinigungsvariante, bei der der zu reinigende Elektrolyt in einen nicht dargestellten Verdampfer geführt wird und so lange eingedampft wird, bis sich sowohl die organische Phase ausbildet, als auch die Sulfate mit dem Gegenion der Lauge ausfallen. Nach der Eindampfung bilden sich drei Schichten. Zwei trübe, breiartige homogene Schichten aus Natriumsulfat und Organik 13a und 13b und der organik- und sulfatarme gereinigte Elektrolyt 13c. Diese Schichten können beispielsweise über ein Filtersystem 15 getrennt werden, indem durch eine Auslaßöffnung 14 zunächst der trübe Abfall 13b abgelassen wird. Sobald der klare Elektrolyt 13c kommt, wird dieser in einem Behälter 16 aufgefangen und zum Katholyten des Bades zurückgeführt. Sobald die zweite trübe Schicht 13a kommt, wird diese wiederum aufgefangen und entsorgt. Die Erfassung des Elektrolyten 13c kann beispielsweise durch einen Arbeiter erfolgen, oder durch eine Photodiode, die aufgrund des Trübungsgrades zwischen Abfall 13a und 13c und gereinigtem Elektrolyten 13c unterscheiden kann. Auch eine Bestimmung über die Messung der Leitfähigkeit wäre möglich.

**Patentansprüche**

1. Verfahren zum abwasserarmen Betrieb eines alkalischen Galvanikbades zum Aufbringen von Zink-Nickel-Überzügen auf ein Werkstück, wobei

   - das Bad (1) eine Anode (2) und eine Kathode (3) aufweist,
   - der Anolyt (5) von dem alkalischen Katholyten (6) durch eine Ionenaustauschermembran (4) getrennt ist und
   - der alkalische Katholyt (6) Zinkionen, Nickelionen und Komplexbildner aufweist,

   **dadurch gekennzeichnet,**

   - **daß** der Katholyt (6) von den sich durch den Betrieb des Bades anreichernden Komplexbildnern gereinigt wird, indem die zu reinigenden Katholytmengen (7) in einen Verdampfer geführt und aufkonzentriert werden, bis der Elektrolyt (7) eine organische Phase (9a, 13a, 13b) ausbildet,
   - **daß** der Elektrolyt (7, 9b) von Sulfaten befreit wird, indem diese ausgefällt werden.

2. Verfahren nach Anspruch 1, **dadurch gekennzeichnet, daß** der Elektrolyt (7, 9b) in einen Kristallisator (10) geführt wird, in welchem er zur Ausfällung der Sulfate auf unter 10°C, vorzugsweise 5°C, abgekühlt wird.

3. Verfahren nach Anspruch 1, **dadurch gekennzeichnet, daß** die Sulfate im Elektrolyten (7, 9b) in einem Verdampfer ausgefällt werden.

**4.** Verfahren nach einem oder mehreren der Ansprüche 1 bis 3, **dadurch gekennzeichnet, daß** der gereinigte Elektrolyt (11, 13c) in den Katholyten (6) des Bades (1) zurückgeführt wird.

**5.** Verfahren nach einem oder mehreren der Ansprüche 1 bis 4, **dadurch gekennzeichnet, daß** die abgetrennte organische Phase (9a) zu den Nickelkomponenten des Bades zurückgeführt wird.

**6.** Verfahren nach einem oder mehreren der Ansprüche 1 bis 5, **dadurch gekennzeichnet, daß** das durch den Verdampfungsprozeß entstehende Destillat dem Spülwasser zugeführt wird.

**7.** Verfahren nach einem oder mehreren der Ansprüche 1 bis 6, **dadurch gekennzeichnet, daß** der Anolyt (5) umgeflutet wird, wobei das Umfluten getaktet durchgeführt wird.

**8.** Verfahren nach einem oder mehreren der Ansprüche 1 bis 7, **dadurch gekennzeichnet, daß** zumindest Teile des Katholyten (6) einmal wöchentlich aufbereitet werden.

**9.** Verfahren nach einem oder mehreren der Ansprüche 1 bis 8, **dadurch gekennzeichnet, daß** die Sulfate durch ein Fällungsmittel ausgefällt werden.

**10.** Verfahren nach einem oder mehreren der Ansprüche 1 bis 9, **dadurch gekennzeichnet, daß** das Spülwasser (12) in den Verdampfer (8) geführt und aufkonzentriert wird.

**11.** Verfahren nach einem oder mehreren der Ansprüche 1 bis 10, **dadurch gekennzeichnet, daß** die zu reinigenden Katholytmengen (7) in einen Verdampfer (8) geführt werden und eingedampft werden, bis die Komplexbildner eine organische Phase ausbilden und die Sulfate mit dem Gegenion der Lauge als Salz ausfallen, wobei die organische Phase mit den Sulfatsalzen Schichten (13a, 13b) ausbildet, die von dem sulfat- und organikarmen Elektrolyten (13c) abgetrennt werden, wobei der gereinigte Elektrolyt (13c) zum Katholyten (6) zurückgeführt wird.

**12.** System zur Pflege eines alkalischen Galvanikbades (1), wobei

    - das Bad (1) eine Anode (2) und eine Kathode (3) aufweist,
    - der Anolyt (5) von dem alkalischen Katholyten (6) durch eine Ionenaustauschermembran (4) getrennt ist und
    - der alkalische Katholyt (6) Zinkionen, Nickelionen und Komplexbildner aufweist,

**dadurch gekennzeichnet, daß**

    - das System einen Verdampfer (8) aufweist, in dem die zu reinigenden Katholytmengen (7) aufkonzentriert werden, bis der Elektrolyt eine organische Phase (9a) ausbildet, die vom restlichen Elektrolyten (9b) abgetrennt werden kann,
    - das System eine Ausfällungseinheit (10) aufweist, in welcher der Elektrolyt (7, 9b) von Sulfaten befreit wird, indem diese als Salz ausgefällt werden.

**13.** System nach Anspruch 12, **dadurch gekennzeichnet, daß** die Ausfällungseinheit ein Kristallisator (10) ist, der eine Kühleinheit aufweist.

**14.** System nach Anspruch 12, **dadurch gekennzeichnet, daß** die Ausfällungseinheit ein Verdampfer ist.

**Claims**

**1.** A method for operating a low-waste water alkaline electroplating bath for electroplating a zinc-nickel coating onto a work piece, in which

    - the bath (1) comprises an anode (2) and a cathode (3),
    - the anolyte (5) is separated from the alkaline catholyte (6) by an ion exchange membrane (4) and
    - the alkaline catholyte (6) contains zinc ions, nickel ions and complexing agents,

**wherein,**

    - the catholyte (6) is purified from the complexing agents which are enriched therein during the operation of the bath, by feeding the catholyte amount to be purified (7) into an evaporator and concentrating said catholyte amount until the electrolyte (7) forms an organic phase (9a, 13a 13b),
    - the electrolyte (7, 9b) is freed from sulfates by means of precipitation.

**2.** A method according to claim 1, wherein the electrolyte (7, 9b) is fed into a crystallizer (10), in which said electrolyte is chilled to below 10°C, preferably 5°C for precipitating the sulfates.

**3.** A method according to claim 1, wherein the sulfates contained within the electrolyte (7, 9b) are precipitated in an evaporator.

**4.** A method according to one or more of claims 1 to 3, wherein the purified electrolyte (11, 13c) is routed back into the catholyte (6) of the bath (1).

**5.** A method according to one or more of claims 1 to 4, wherein the separated organic phase (9a) is routed back to the nickel components of the bath.

6. A method according to one or more of claims 1 to 5, wherein the distillate obtained during the evaporation process is delivered into the rinsing water.

7. A method according to one or more of claims 1 to 6, wherein the anolyte (5) is flushed and wherein the flushing is being performed clocked.

8. A method according to one or more of claims 1 to 7, wherein at least portions of the catholyte (6) are recycled once a week.

9. A method according to one or more of claims 1 to 8, wherein the sulfate is precipitated by a precipitating agent.

10. A method according to one or more of claims 1 to 9, wherein the rinsing water (12) is routed into the evaporator (8) and is concentrated.

11. A method according to one or more of claims 1 to 10, wherein the amount of catholyte to be purified (7) is routed into the evaporator (8) and is evaporated until an organic phase is formed by the complexing agents and the sulfates precipitate with the counter ion of the base as salt , wherein the organic phase forms with the sulfate salts layers (13a, 13b), which are separated from the sulfate- and organic depleted electrolyte (13c), wherein the purified electrolyte (13c) is routed back to the catholyte (6).

12. A system for the maintenance of an alkaline electroplating bath, wherein

- the bath (1) comprises an anode (2) and a cathode (3),
- the anolyte (5) is separated from the alkaline catholyte (6) by an ion exchange membrane and
- the alkaline catholyte (6) contains zinc ions, nickel ions and complexing agents,

**wherein,**

- the system comprises an evaporator (8), in which the catholyte amount to be purified (7) is concentrated until the electrolyte forms an organic phase (9a), which can be separated from the remaining electrolyte (9b),
- the system comprises a precipitating unit (10), in which the electrolyte (7, 9b) is freed from sulfates by precipitating them as salts.

13. A system according to claim 12, wherein the precipitating unit is a crystallizer (10), comprising a chiller unit.

14. A system according to claim 12, wherein the precipitating unit is an evaporator.

**Revendications**

1. Procédé pour l'exploitation à faible quantité d'eaux usées d'un bain galvanique alcalin pour l'application de revêtements zinc-nickel sur une pièce, dans lequel

- le bain (1) présente une anode (2) et une cathode (3),
- l'anolyte (5) est séparé du catholyte alcalin (6) par une membrane échangeuse d'ions (4) et
- le catholyte alcalin (6) présente des ions zinc, des ions nickel et des agents complexants,

**caractérisé en ce**

- **que** le catholyte (6) est purifié des agents complexants qui s'enrichissent du fait de l'exploitation du bain, les quantités de catholyte (7) à purifier étant conduites dans un évaporateur et concentrées jusqu'à ce que l'électrolyte (7) forme une phase organique (9a, 13a, 13b),
- **que** l'électrolyte (7, 9b) est débarrassé des sulfates par précipitation de ces derniers.

2. Procédé selon la revendication 1, **caractérisé en ce que** l'électrolyte (7, 9b) est conduit dans un cristallisoir (10) dans lequel il est refroidi à moins de 10 °C, de préférence 5 °C, pour précipiter les sulfates.

3. Procédé selon la revendication 1, **caractérisé en ce que** les sulfates présents dans l'électrolyte (7, 9b) sont précipités dans un évaporateur.

4. Procédé selon une ou plusieurs des revendications 1 à 3, **caractérisé en ce que** l'électrolyte purifié (11, 13c) est ramené dans le catholyte (6) du bain (1).

5. Procédé selon une ou plusieurs des revendications 1 à 4, **caractérisé en ce que** la phase organique (9a) séparée est ramenée aux composantes de nickel du bain.

6. Procédé selon une ou plusieurs des revendications 1 à 5, **caractérisé en ce que** le distillat résultant du processus d'évaporation est amené à l'eau de rinçage.

7. Procédé selon une ou plusieurs des revendications 1 à 6, **caractérisé en ce que** l'anolyte (5) est soumis à une circulation de liquide, la circulation de liquide étant réalisée de manière cyclique.

8. Procédé selon une ou plusieurs des revendications 1 à 7, **caractérisé en ce qu'**au moins des parties du catholyte (6) sont traitées une fois par semaine.

9. Procédé selon une ou plusieurs des revendications 1 à 8, **caractérisé en ce que** les sulfates sont précipités par un précipitant.

10. Procédé selon une ou plusieurs des revendications 1 à 9, **caractérisé en ce que** l'eau de rinçage (12) est conduite dans l'évaporateur (8) et concentrée.

11. Procédé selon une ou plusieurs des revendications 1 à 10, **caractérisé en ce que** les quantités de catholyte (7) à purifier sont conduites dans un évaporateur (8) et concentrées par évaporation jusqu'à ce que les agents complexants forment une phase organique et les sulfates précipitent sous forme de sel avec l'ion de signe opposé de la solution alcaline, la phase organique formant avec les sels de sulfate des couches (13a, 13b) qui sont séparées de l'électrolyte (13c) pauvre en sulfates et en substances organiques, l'électrolyte (13c) purifié étant ramené au catholyte (6).

12. Système d'entretien d'un bain galvanique alcalin (1), dans lequel

   - le bain (1) présente une anode (2) et une cathode (3),
   - l'anolyte (5) est séparé du catholyte alcalin (6) par une membrane échangeuse d'ions (4) et
   - le catholyte alcalin (6) présente des ions zinc, des ions nickel et des agents complexants,

   **caractérisé en ce que**

   - le système présente un évaporateur (8) dans lequel les quantités de catholyte (7) à purifier sont concentrées jusqu'à ce que l'électrolyte forme une phase organique (9a) qui peut être séparée de l'électrolyte restant (9b),
   - le système présente une unité de précipitation (10) dans lequel l'électrolyte (7, 9b) est débarrassé des sulfates, ceux-ci précipitant sous forme de sel.

13. Système selon la revendication 12, **caractérisé en ce que** l'unité de précipitation est un cristallisoir (10) qui présente une unité de refroidissement.

14. Système selon la revendication 12, **caractérisé en ce que** l'unité de précipitation est un évaporateur.

Fig. 1

EP 1 533 399 B1

$\text{R-CH}_2\text{-NH-CH}_2\text{-CH}_2\text{-NH}_2$    (Komplexbildner für Nickel)

$\text{R-CH}_2\text{-NH-CH}_2\text{-CN}$  $\longrightarrow$  $\text{R-CH}_2\text{-NH-CH}_2\text{-OH}$  +  $\text{CN}^-$

$\text{R-CH}_2\text{-NH-CH}_2\text{-COONa}$  +  $\text{NH}_3$

Weitere Zwischenprodukte

$\text{R-NH}_2$ + NaOOC-COONa

$\text{Na}_2\text{CO}_3$

**Anode**

Fig. 2

**Fig. 3**

**Anode**           **Kathode**

**Membran**

**Anolyt:**

100 g/l $H_2SO_4$

**Katholyt:**

Zn/Ni-Bad

**Fig. 4 a**

Rückführung
zur Nickelmischung

9

9a
Organische Phase

9b
organikarmer
Elektrolyt

10
Kristallisator

Entsorgung
Feststoff
Salzfracht

Destillat

8
Verdampfer

7
Vorlage
Elektrolyt
unbehandelt

11
gereinigter
Elektrolyt

# Fig. 4 b

Fig. 4 b

**Destillation 900 L**

**12**
1000 L
Spülwasser

**8**
Verdampfer

**Konzentrat 100 L**

EP 1 533 399 B1

**Fig. 5**

Elektrolyt

Membrane — Kühlung — Pumpstation alternierend — Wasserdosierung VE-Wasser

Zn-Löseabteil — Online-Analytik Ringleitung SPS — Filtration Bandfilter

Kühlung Umwälzung — SPS Bypass — Filtration Bandfilter

Dosierung Ah-abhängig — Produkt 1 — Produkt 2 — Nickelmischung — Entsorgung Feststoff Salzfracht

Quertransport Kammerfilterpresse — Filtration — Spülen nach ZnNi 4 fach

Elektrolyt Aufbereitung Diskontinuierlich

Verdampfer — Konzentrat 1 — Komplexbildner ausölen — Kristallisator -3°C

Destillat

Zu den Spülen

regenerierter Elektrolyt

Rücklauf

EP 1 533 399 B1

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19834353